# EUROPEAN PATENT APPLICATION

(11) **EP 4 733 973 A1**
(43) Date of publication of application: **29.04.2026**
(21) Application number: 24841931.9
(22) Date of filing: 28.02.2024
(51) Int. Cl.: G06F 21/62, H04L 9/40

(54) **DATA ACCESS CONTROL METHOD AND APPARATUS**

(30) Priority: 17.07.2023 CN 202310876413; 27.09.2023 CN 202311264762
(71) Applicant: Huawei Cloud Computing Technologies Co., Ltd., Guiyang, Guizhou, 550025 (CN)
(72) Inventor: WANG, Jipeng, Guiyang, Guizhou 550025 (CN); WU, Huatao, Guiyang, Guizhou 550025 (CN); ZHANG, Chunli, Guiyang, Guizhou 550025 (CN)
(74) Representative: Körber, Martin Hans
(86) International application number: PCT/CN2024/078989
(87) International publication number: WO 2025/015927

(57) **Abstract**

Embodiments of this application disclose a data access control method and apparatus, to improve data access control security. The method in embodiments of this application includes: configuring authentication information for data access control, where the authentication information includes one or more of the following: an identity clearance level, a resource security level, and an environment security level, the identity clearance level indicates access permission of a user, the resource security level indicates a security level of a cloud resource, and the environment security level indicates a security level of a cloud environment; receiving a data access request from the user, where the data access request is for requesting to access data in the cloud resource or the cloud environment; and processing the data access request according to authentication logic, where the authentication logic includes control logic between authentication information, the authentication logic is for controlling data access permission of the user in the cloud resource or the cloud environment, or is for controlling a flow direction of the data between cloud resources or cloud environments, and the flow direction is from a low security level to a high security level.

## Description

This application claims priority to Chinese Patent Application No. 202310876413.5, filed with the China National Intellectual Property Administration on July 17, 2023 and entitled "ACCESS CONTROL METHOD AND APPARATUS, AND ANOTHER DEVICE", which is incorporated herein by reference in its entirety.

This application claims priority to Chinese Patent Application No. 202311264762.8, filed with the China National Intellectual Property Administration on September 27, 2023 and entitled "DATA ACCESS CONTROL METHOD AND APPARATUS", which is incorporated herein by reference in its entirety.

### TECHNICAL FIELD

Embodiments of this application relate to the field of cloud computing, and in particular, to a data access control method and apparatus.

### BACKGROUND

Over years of development, cloud computing has evolved from a form in which computer resources are for providing services through an internet to a cloud environment oriented microservice architecture mode, to support industry upgrade and unleash productivity. With the development of the cloud computing, various industries further embrace the cloud computing. In this process, the importance of cloud data security becomes increasingly prominent.

In a current cloud data access control policy, a cloud data center performs data access control based on attributes of an access user and an access object, to be specific, the cloud data center controls access of the access user to a cloud resource based on an access permission attribute of the access user. After the access user obtains access permission of the cloud data center, the cloud data center allows the user to access the cloud resource. However, after the access user obtains the cloud resource, transferring the cloud resource to an external environment by the access user is beyond control of a cloud service platform, resulting in a high risk of data leakage, and data access control security of the cloud data center is poor.

### SUMMARY

Embodiments of this application provide a data access control method. A cloud data center can configure a resource security level of a cloud resource, to restrict flow of data in the cloud resource based on the resource security level, thereby improving data access control security. Embodiments of this application further provide a data access control apparatus that corresponds to the data access control method, a computing device, a computing device cluster, a computer-readable storage medium, and a computer program product.

According to a first aspect, an embodiment of this application provides a data access control method. The method may be performed by a data access system, or may be performed by a component of the data access system, for example, a processor, a chip, or a chip system of the data access system, or may be implemented by a logical module or software that can implement all or some functions of the data access system. A cloud data center is used as an example of the data access system. The method provided in the first aspect includes: The cloud data center configures authentication information for data access control, where the authentication information includes one or more of the following: an identity clearance level, a resource security level, and an environment security level, the identity clearance level indicates access permission of a user, the resource security level indicates a security level of a cloud resource, the environment security level indicates a security level of a cloud environment in which the cloud resource is located, and the cloud resource includes one or more of the following: a computing resource, a network resource, and a storage resource. The cloud data center receives a data access request from the user, where the data access request is for requesting to access data in the cloud resource, and the data access request carries the authentication information. The cloud data center processes the data access request according to authentication logic, where the authentication logic includes control logic between authentication information, the authentication logic is for controlling data access permission of the user in the cloud resource or the cloud environment, and controlling a flow direction of the data between cloud resources or cloud environments, and the flow direction is from a low security level to a high security level. The cloud data center allows or rejects the data access request of the user based on an authentication logic processing result of the data access request.

In this embodiment of this application, the cloud data center data can separately configure the authentication information for the user and the cloud resource, and control data flow between different cloud resources according to the authentication logic between authentication information, so that the data in the cloud resource flows from a cloud resource with a low resource security level to a cloud resource with a high resource security level, thereby avoiding leakage of the data in the cloud resource and improving data access control security.

In a possible implementation, in a process in which the cloud data center configures the authentication information for the data access control, the cloud data center configures identity clearance levels of different users based on an organization architecture level of a user, where a highest configurable identity clearance level of a user in a low-level organization is lower than a highest configurable identity level of a user in a high-level organization.

In this embodiment of this application, the cloud data center can configure an identity clearance level for a user, determine a highest configurable identity clearance level of the user based on a level of the user in an organization architecture of the user, and control access permission of the user to the cloud resource based on the identity clearance level of the user, thereby improving data access control security.

In a possible implementation, the cloud data center sets an identity clearance level configuration manner of a new user. The configuration manner includes inheriting an identity clearance level of a user at an upper layer in an organization architecture and configuring an identity clearance level in a default manner. The default manner refers to not inheriting the identity clearance level of the user at the upper layer in the organization architecture, in other words, refers to configuring the identity clearance level of the user based on a lowest identity clearance level.

In this embodiment of this application, the cloud data center sets the identity clearance level configuration manner of the new user, and automatically configures an identity clearance level of the new user in the identity clearance level configuration manner, thereby improving configuration efficiency of the identity clearance level of the user.

In a possible implementation, the cloud data center configures the resource security level of the cloud resource based on an identity clearance level of a creator user, where the creator user is a user who creates the cloud resource, and the resource security level of the cloud resource is positively correlated with the identity clearance level of the creator user. For example, if the identity clearance level of the creator user of the cloud resource is level 1, the resource security level of the cloud resource created by the user is level 1.

In this embodiment of this application, in a process of configuring a resource level of the cloud resource, the cloud data center may configure the resource security level of the cloud resource based on the identity clearance level of the creator user of the cloud resource, thereby improving configuration efficiency of the resource security level and cloud resource security.

In a possible implementation, when the identity clearance level of the user is higher than or equal to the resource security level of the cloud resource, the user is allowed to read data from the cloud resource. When the identity clearance level of the user is lower than or equal to the resource security level of the cloud resource, the user is allowed to write data into the cloud resource.

In this embodiment of this application, the cloud data center can allow a user whose identity clearance level is higher than the resource security level to read the data in the cloud resource, and forbid the user whose identity clearance level is higher than the resource security level to write the data into the cloud resource, thereby avoiding leakage of the data from a user with a high identity clearance level to a cloud resource with a low resource security level, and improving data access control security.

In a possible implementation, the data access request is for requesting to transfer data in a source cloud resource to a destination cloud resource. In a process in which the cloud data center processes the data access request according to the authentication logic between authentication information, when a resource security level of the source cloud resource is lower than or equal to a resource security level of the destination cloud resource, the user is allowed to transfer the data in the source cloud resource to the destination cloud resource.

In this embodiment of this application, the cloud data center controls data flow between different cloud resources based on resource security levels, so that data can only flow from a cloud resource with a low resource security level to a cloud resource with a high resource security level, thereby improving security of a data flow between different cloud resources.

In a possible implementation, the authentication information further includes an environment security level of the cloud environment, and the data access request is for requesting to transfer data in a source cloud environment to a destination cloud environment. In the process in which the cloud data center processes the data access request according to the authentication logic between authentication information, when an environment security level of the source cloud environment is lower than or equal to an environment security level of the destination cloud environment, the user is allowed to transfer the data in the source cloud environment to the destination cloud environment.

In this embodiment of this application, the cloud data center controls data flow between different cloud environments based on environment security levels, so that data can only flow from a cloud environment with a low environment security level to a cloud environment with a high environment security level, thereby improving security of a data flow between different cloud environments.

In a possible implementation, the cloud data center needs to configure the authentication logic between authentication information for the data access control. Authentication logic between the identity clearance level and the resource security level includes: If the identity clearance level of the user is higher than or equal to the resource security level of the cloud resource, the user is allowed to access the data in the cloud resource. Authentication logic between the identity clearance level and the environment security level includes: If the identity clearance level of the user is higher than or equal to the environment security level, the user is allowed to access the data in the cloud environment. Authentication logic between different cloud resource security levels includes: The data in the cloud resource can only flow from a low-security-level cloud resource to a high-security-level cloud resource. Authentication logic between different environment security levels includes: The data in a cloud platform can only flow from a low-security-level cloud environment to a high-security-level cloud environment.

In this embodiment of this application, the cloud data center can preconfigure the authentication logic between authentication information, to control data flow between different cloud resources or cloud environments according to the authentication logic, thereby improving data access control security.

In a possible implementation, the data access request further includes first temporary authorization information. In the process in which the cloud data center processes the data access request according to the authentication logic between authentication information, when the environment security level of the source cloud environment is higher than the environment security level of the destination cloud environment, the user is allowed, based on the first temporary authorization information, to transfer the data in the source cloud environment to the destination cloud environment, where the first temporary authorization information is for authorizing flow of the data from a high-security-level cloud environment to a low-security-level cloud environment.

In this embodiment of this application, the cloud data center can access and control, based on the temporary authorization information, the data to flow from the cloud environment with the high environment security level to the cloud environment with the low environment security level, thereby improving security of data flow between different cloud environments.

In a possible implementation, the data access request further includes second temporary authorization information. When the identity clearance level of the user is lower than the resource security level of the cloud resource, the user is allowed, based on the second temporary authorization information, to read the data in the cloud resource, where the second temporary authorization information is for authorizing the user to access a cloud resource whose resource security level is higher than the identity clearance level.

In this embodiment of this application, the user can access, based on the temporary authorization information, a cloud resource whose resource security level is higher than the identity clearance level of the user, thereby improving data access control flexibility.

In a possible implementation, the data access request further includes third temporary authorization information. In the process in which the cloud data center processes the data access request according to the authentication logic between authentication information, when the resource security level of the source cloud resource is higher than the resource security level of the destination cloud resource, the user is allowed, based on the third temporary authorization information, to transfer the data in the source cloud resource to the destination cloud resource, where the third temporary authorization information is for authorizing flow of the data from a high-security-level cloud resource to a low-security-level cloud resource.

In this embodiment of this application, the cloud data center can access and control, based on the temporary authorization information, the data to flow from the cloud resource with the high resource security level to the cloud resource with the low resource security level, thereby improving security of data flow between different cloud resources.

In a possible implementation, the temporary authorization information includes approver information and signature information, the approver information includes one or more specified approvers that allow unconventional access, and the signature information includes a key for temporarily authorizing user access. The user can obtain temporary authorization permission only after one or more approvers in the approver information all complete their approval.

In this embodiment of this application, when the user obtains the temporary authorization information, the user can obtain the temporary authorization permission only after one or more approvers needing an instruction all complete their approval, thereby improving data access control security.

In a possible implementation, the identity clearance level of the user cannot be effective across organizations, in other words, identity clearance levels of users in different organization architectures are independent of each other. For example, although an identity clearance level of a user in a first organization is higher than a resource security level of a cloud resource corresponding to a second organization, the user in the first organization cannot access the cloud resource corresponding to the second organization.

In this embodiment of this application, identity clearance levels of users in different organization architectures are independent of each other, thereby improving data access control security of a cloud data center.

According to a second aspect, an embodiment of this application provides a data access control apparatus. The apparatus includes a configuration unit, a transceiver unit, and a processing unit. The configuration unit is configured to configure authentication information for data access control, where the authentication information includes one or more of the following: an identity clearance level, a resource security level, and an environment security level, the identity clearance level indicates access permission of a user, the resource security level indicates a security level of a cloud resource, the environment security level indicates a security level of a cloud environment in which the cloud resource is located, and the cloud resource includes one or more of the following: a computing resource, a network resource, and a storage resource. The transceiver unit is configured to receive a data access request from the user, where the data access request is for requesting to access data in the cloud resource. The processing unit is configured to process the data access request according to authentication logic, where the authentication logic includes control logic between authentication information, the authentication logic is for controlling data access permission of the user in the cloud resource or the cloud environment, and controlling a flow direction of the data between cloud resources or cloud environments, and the flow direction is from a low security level to a high security level. The processing unit is further configured to allow or reject data access of the user based on an authentication logic processing result of the data access request.

In a possible implementation, the configuration unit is specifically configured to configure identity clearance levels of different users based on an organization architecture level of a user, where a highest configurable identity clearance level of a user in a low-level organization is lower than a highest configurable identity level of a user in a high-level organization.

In a possible implementation, the configuration unit is further configured to set an identity clearance level configuration manner of a new user, where the configuration manner includes inheriting an identity clearance level of an organization and performing configuration in a default manner, and the default manner is performing configuration based on a lowest identity clearance level.

In a possible implementation, the configuration unit is further configured to configure the resource security level of the cloud resource based on an identity clearance level of a creator user, where the creator user is a user who creates the cloud resource, and the resource security level of the cloud resource is positively correlated with the identity clearance level of the creator user.

In a possible implementation, the processing unit is specifically configured to: when the identity clearance level of the user is higher than or equal to the resource security level of the cloud resource, allow the user to read data from the cloud resource; and when the identity clearance level of the user is lower than or equal to the resource security level of the cloud resource, allow the user to write data into the cloud resource.

In a possible implementation, the data access request is for requesting to transfer data in a source cloud resource to a destination cloud resource, and the processing unit is specifically configured to: when a resource security level of the source cloud resource is lower than or equal to a resource security level of the destination cloud resource, allow the user to transfer the data in the source cloud resource to the destination cloud resource.

In a possible implementation, the data access request is for requesting to transfer data in a source cloud environment to a destination cloud environment, and the processing unit is configured to: when an environment security level of the source cloud environment is lower than or equal to an environment security level of the destination cloud environment, allow the user to transfer the data in the source cloud environment to the destination cloud environment.

In a possible implementation, the data access request further includes first temporary authorization information, and the processing unit is further configured to: when the environment security level of the source cloud environment is higher than the environment security level of the destination cloud environment, allow, based on the first temporary authorization information, the user to transfer the data in the source cloud environment to the destination cloud environment, where the first temporary authorization information is for authorizing flow of the data from a high-security-level cloud environment to a low-security-level cloud environment.

In a possible implementation, the data access request further includes second temporary authorization information, and the processing unit is further configured to: when the identity clearance level of the user is lower than the resource security level of the cloud resource, allow, based on the second temporary authorization information, the user to read the data in the cloud resource, where the second temporary authorization information is for authorizing the user to access a cloud resource whose resource security level is higher than the identity clearance level.

In a possible implementation, the data access request further includes third temporary authorization information, and the processing unit is further configured to: when an environment security level of the source cloud resource is higher than an environment security level of the destination cloud resource, allow, based on the third temporary authorization information, the user to transfer the data in the source cloud resource to the destination cloud resource, where the third temporary authorization information is for authorizing flow of the data from a high-security-level cloud resource to a low-security-level cloud resource.

According to a third aspect, an embodiment of this application provides a computing device. The computing device includes a processor, the processor is coupled to a memory, and the processor is configured to store instructions. When the instructions are executed by the processor, the computing device is caused to perform the method according to any one of the first aspect or the possible implementations of the first aspect.

According to a fourth aspect, an embodiment of this application provides a computing device cluster. The computing device cluster includes one or more computing devices, the computing device includes a processor, the processor is coupled to a memory, and the processor is configured to store instructions. When the instructions are executed by the processor, the computing device cluster is caused to perform the method according to any one of the first aspect or the possible implementations of the first aspect.

According to a fifth aspect, an embodiment of this application provides a computer-readable storage medium. The computer-readable storage medium stores instructions. When the instructions are executed, a computer is caused to perform the method according to any one of the first aspect or the possible implementations of the first aspect.

According to a sixth aspect, an embodiment of this application provides a computer program product. The computer program product includes instructions, and when the instructions are executed, a computer is caused to implement the method according to any one of the first aspect or the possible implementations of the first aspect.

It may be understood that, for beneficial effects that can be achieved by any one of the foregoing data access control apparatus, computing device, computing device cluster, computer-readable medium, computer program product, or the like, refer to beneficial effects in a corresponding method. Details are not described herein again.

### BRIEF DESCRIPTION OF DRAWINGS

FIG. 1 is a diagram of a system architecture of a data access control system according to an embodiment of this application;
FIG. 2 is a schematic flowchart of a data access control method according to an embodiment of this application;
FIG. 3 is a diagram of a user organization architecture according to an embodiment of this application;
FIG. 4 is a schematic flowchart of another data access control method according to an embodiment of this application;
FIG. 5 is a schematic flowchart of another data access control method according to an embodiment of this application;
FIG. 6 is a schematic flowchart of another data access control method according to an embodiment of this application;
FIG. 7 is a schematic flowchart of another data access control method according to an embodiment of this application;
FIG. 8 is a diagram of a structure of a data access control apparatus according to an embodiment of this application;
FIG. 9 is a diagram of a structure of a computing device according to an embodiment of this application;
FIG. 10 is a diagram of a structure of a computing device cluster according to an embodiment of this application; and
FIG. 11 is a diagram of a structure of another computing device cluster according to an embodiment of this application.

### DESCRIPTION OF EMBODIMENTS

Embodiments of this application provide a data access control-based method and apparatus, to improve data access control security of a cloud data center.

In the specification, claims, and accompanying drawings of this application, the terms "first", "second", "third", "fourth", and the like (if any) are intended to distinguish between similar objects but do not necessarily indicate a specific order or sequence. It should be understood that the data used in such a way are interchangeable in proper circumstances, so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In addition, in embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Specifically, the terms such as "example" or "for example" is intended to present a related concept in a specific manner.

First, some terms in embodiments of this application are described, to help a person skilled in the art understand the technical solutions.

A mandatory access control model restricts access of a subject to a resource according to a predefined security policy. The security policy is usually defined by a system administrator or a security policy formulator, and resources and operations that can be accessed by users are determined based on security levels, roles, or other attributes of the users. In the mandatory access control model, permission control is not determined by individuals, but by an entire system.

A bell lapadula (bell lapadula, BLP) model is a mandatory access control model proposed by David Elliott Bell and Leonard J. LaPadula in 1973. The model aims to formulate a multi-level security policy to protect data confidentiality. The model describes a set of rules based on a subject security permission level and an object security level. If the subject's access to data complies with the security policy, the system is in a secure state. An access control feature of the BLP model is no read-up or write-down. To be specific, the subject cannot read data whose security level is higher than a permission level, and cannot write an object whose security level is lower than a permission level.

Attribute-based access control (attribute-based access control, ABAC) allows or rejects, based on an assigned attribute of a subject, an assigned attribute of an object, an environment condition, and a set of policies related to the attributes and condition, an operation requested by the subject on the object. An attribute is a feature of a subject, an object, or an environment condition.

To make the technical solutions of this application clearer and easier to understand, the following describes a system architecture of this application with reference to the accompanying drawings.

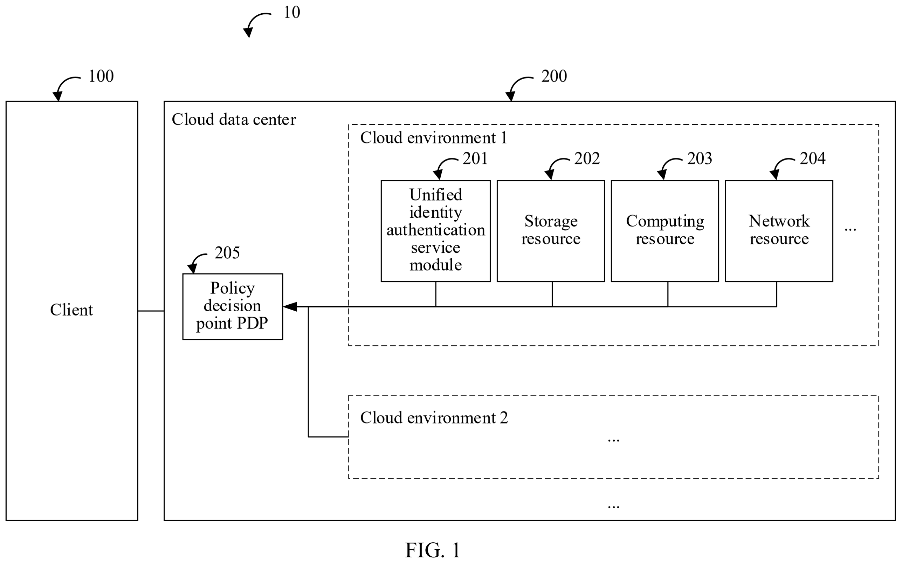

FIG. 1 is a diagram of a system architecture of a data access control system according to an example of this application. In the example shown in FIG. 1, the data access control system 10 includes a user client 100 and a cloud data center 200. The cloud data center 200 includes a unified identity authentication service module 201, a storage resource 202, a computing resource 203, a network resource 204, and a policy decision point 205. The following specifically describes functions of each part.

The user client 100 is configured to request a cloud resource related to a cloud service from the cloud data center 200, where the cloud resource includes a storage resource, a computing resource, and a network resource. For example, a user may send a data access request to the cloud data center 200 through the user client 100, where the data access request is for requesting to read data in the cloud resource, or is for requesting to write data into the cloud resource. For another example, the data access request is further for requesting to copy the data in the cloud resource to another cloud resource.

It may be understood that the user client 100 may be a client corresponding to one or more users in an organization architecture of a cloud enterprise. Each user in the organization architecture of the cloud enterprise has a cloud account. The user logs in to the user client 100 based on the cloud account, and accesses the cloud resource in the cloud data center 200 based on an application programming interface between the user client 100 and the cloud data center 200.

The cloud data center 200 can centrally manage and control various cloud resources. For example, after receiving the data access request from the user client 100, the cloud data center 200 performs processing based on an identity clearance level and an access requirement of the user, and returns a corresponding access response to the user client 100. The access response may include an execution result, required data, and the like. The cloud data center 200 includes the unified identity authentication service module 201, the storage resource 202, the computing resource 203, the network resource 204, and the policy decision point 205. The following specifically describes functions of each part.

The unified identity authentication service module 201 is configured to perform unified management and authentication on identities of users, including managing identity authentication information of the users, where the identity authentication information is, for example, a cloud account and a password. The unified identity authentication service module 201 is further configured to configure an identity clearance level for a cloud account of each user. For example, a security level administrator of an enterprise configures the identity clearance level for the cloud account of each user through the unified identity authentication service module 201.

The storage resource 202 is for providing the user client 100 with a device or a service for storing and managing data. The storage resource 202 is, for example, object storage, block storage, and file storage. The object storage is data storage in a form of an object, and a user may access and operate the object based on a unique identifier. The block storage provides a storage mode similar to that of a physical disk, and a user may access and manage data in a form of a block. The file storage provides a storage service of a file system, and a user may access and share a file by using a standard file protocol.

The computing resource 203 is for providing the user client 100 with a resource, such as a server or a processor for processing and executing a computing task. The computing resource 203 is, for example, an elastic compute service ECS. The elastic compute service provides an elastically adjustable virtual server resource for the user, allowing the user to create, manage, and deploy computing resources on a cloud and execute a computing task from the user based on the computing resources.

The network resource 204 is a network device and service that provides connectivity and data transmission the user client 100. The network resource 204 is, for example, a virtual private cloud VPC. The virtual private cloud is a logically isolated virtual network, and can provide a customizable and scalable network service for the user, so that the user can construct and manage a private network of the user on the cloud.

It should be noted that the storage resource 202, the computing resource 203, and the network resource 204 in the cloud data center 200 may be located in different network environments. The cloud data center can configure resource security levels for different cloud resources, and configure environment security levels for different network environments. The cloud data center 200 may control data flow between different cloud resources based on the resource security levels, and control data flow between different cloud environments based on the environment security levels.

The policy decision point 205 is for formulating and executing authentication logic in the cloud data center, where the authentication logic includes authentication logic between the identity clearance level of the user and the resource security level of the cloud resource, authentication logic between the identity clearance level of the user and the environment security level of the cloud environment, authentication logic of the data flow between the cloud resources, and authentication logic of the data flow between the cloud environments.

Specifically, the policy decision point 205 can analyze the identity clearance level, the environment security level, the resource security level, and context information that are included in the data access request, and perform matching and evaluation according to predefined authentication logic to determine whether to allow or reject the data access request. For example, the policy decision point 205 may allow the user to access a cloud resource whose resource security level is lower than or equal to the identity clearance level, and reject the user to access a cloud resource whose resource security level is higher than the identity clearance level. For another example, the policy decision point 205 allows data to flow from a cloud resource with a low resource security level to a cloud resource with a high resource security level. The policy decision point 205 may further allow data to flow from a cloud environment with a low environment security level to a cloud environment with a high environment security level.

Based on the data access control system 10 shown in FIG. 1, this application further provides a data access control method. The following describes the data access control method provided in embodiments of this application with reference to embodiments.

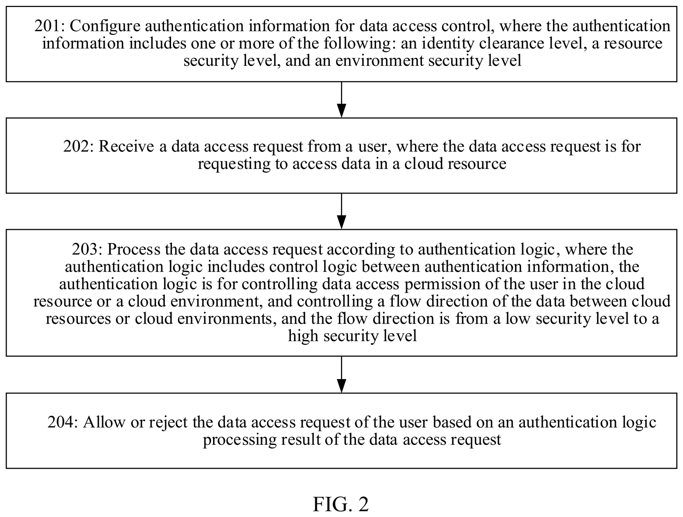

FIG. 2 is a schematic flowchart of a data access control method according to an embodiment of this application. In an example shown in FIG. 2, the method includes the following steps.

Step 201: Configure authentication information for data access control, where the authentication information includes one or more of the following: an identity clearance level, an environment security level, and a cloud resource security level.

Before performing data access control, a cloud data center 200 needs to configure the authentication information for the data access control. The authentication information includes one or more of the following: the identity clearance level, the environment security level, and the resource security level. Specifically, the cloud data center 200 separately configures identity clearance levels for users in an organization architecture of a cloud enterprise, configures environment security levels for different cloud environments, and configures resource security levels for different cloud resources. The cloud resource includes one or more of the following: a computing resource, a network resource, and a storage resource. The cloud environments include cloud environments provided by different cloud service providers. The following describes in detail configuration processes of several types of authentication information.

In a process in which the cloud data center 200 configures identity clearance levels of users in enterprise organizations, the cloud data center 200 arranges cloud accounts of all users in cloud enterprises based on organization architecture levels of the enterprises. A security level administrator of an enterprise configures an identity clearance level (clearance level, CL) for a cloud account of a user in an organization architecture based on an actual service requirement. After the cloud data center 200 configures the identity clearance levels of the users, the identity clearance levels of the users are managed and authenticated based on a unified identity authentication service (identity and access management, IAM).

It may be understood that, the users in the enterprise organizations include users at different levels of the organization architecture, and the users at the different levels are, for example, a high-level user, a medium-level user, and a low-level user. Identity clearance levels of the users at the different levels are different. The identity clearance level of the user may be represented by using an Arabic numeral. A larger numeral indicates a higher identity clearance level of the user. For example, the identity clearance levels of the users may be classified into level 0 to level 10.

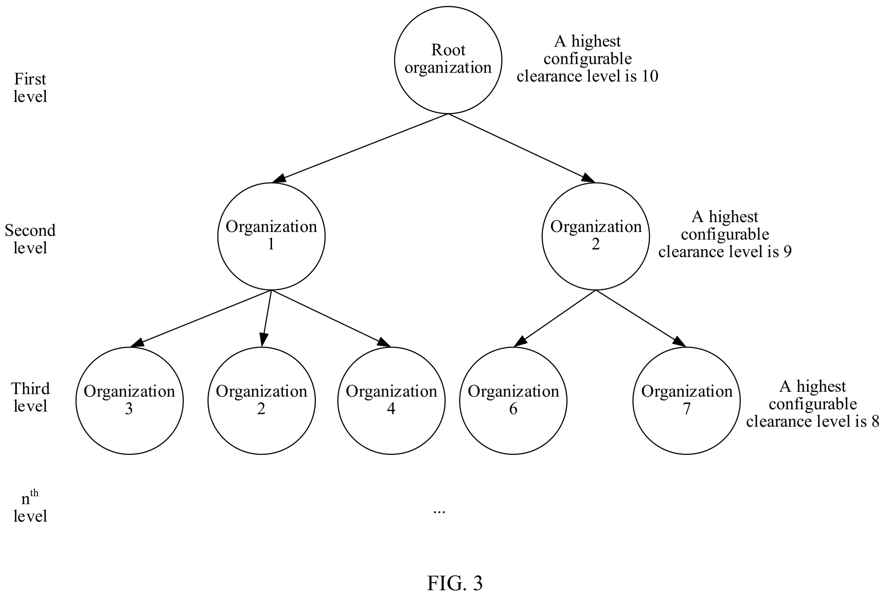

FIG. 3 is a diagram of a user organization architecture according to an embodiment of this application. In an example shown in FIG. 3, an organization architecture of an enterprise includes a plurality of organization architecture levels, an organization at each level of the organization architecture includes one or more users, and a highest configurable identity clearance level of users in organizations at a same level is an identity clearance level corresponding to the organization level. For example, in the organization architecture of the enterprise shown in FIG. 3, both an organization 1 and an organization 2 at a second level include one or more users, and a highest configurable identity clearance level of users in the organization 1 and the organization 2 is an identity clearance level corresponding to the organization level. For example, the highest configurable identity clearance level of the users in the organization 1 and the organization 2 is level 9.

When a cloud data center 200 configures identity clearance levels of different users in the organization architecture, a highest configurable identity clearance level of a user in a low-level organization cannot be higher than a highest configurable identity clearance level of a user in a high-level organization. For example, in the organization architecture shown in FIG. 3, the highest configurable identity clearance level of the users in the organization 1 and the organization 2 at the second level is level 9, and a highest configurable identity clearance level of a user in a root organization at a first level is level 10. That is, the highest configurable identity clearance level of the users at the second level is lower than that of the user at the first level.

It should be noted that, the cloud data center 200 may further set an identity clearance level configuration manner of a new user. The configuration manner includes that the new user inherits an identity clearance level corresponding to an organization to which the new user belongs, or configuration is performed for the new user in a default configuration manner, where the default configuration manner is performing configuration based on a lowest identity clearance level. For example, if the cloud data center 200 sets the identity clearance level configuration manner of the new user to the default configuration manner, when a user is newly added to the organization architecture, the cloud data center 200 configures an identity clearance level of the new user to level 0 based on a default identity clearance level.

Still refer to FIG. 3. In the example shown in FIG. 3, when a user is newly added to an organization 7 in the organization architecture, because the identity clearance level configuration manner of the new user is the default configuration manner, when configuring an identity clearance level of the new user, the cloud data center 200 configures the identity clearance level of the new user in the organization 7 to level 0 in the default configuration manner.

In a process in which the cloud data center 200 configures environment security levels for different cloud environments, the cloud data center 200 may need to configure different environment security levels (security level, SL) for the different cloud environments based on a service requirement. The different cloud environments are, for example, cloud service environments provided by different cloud service providers. The environment security level of the cloud environment may also be represented by using an Arabic numeral. A larger numeral indicates a higher environment security level. For example, the different cloud environments are classified into an edge cloud, a public cloud, and a secret cloud based on the environment security levels. An environment security level of the edge cloud is level 1, and an environment security level of the secret cloud is level 10.

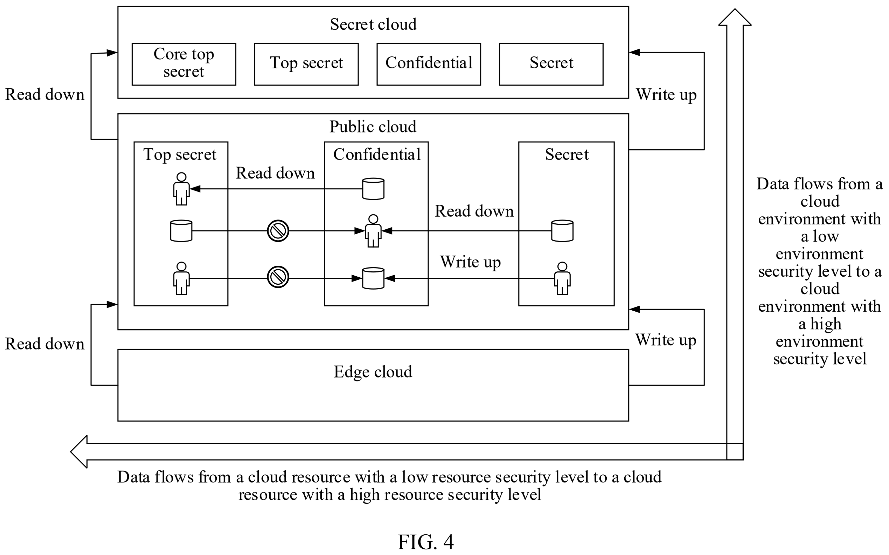

FIG. 4 is a diagram of different cloud environments according to an embodiment of this application. In an example shown in FIG. 4, a cloud data center 200 may configure environment security levels for different cloud environments based on a service requirement. For example, the different cloud environments may be classified into a secret cloud, a public cloud, and an edge cloud based on the environment security levels. An environment security level corresponding to the secret cloud is level 10, environment security levels corresponding to the public cloud are level 4 to level 9, and environment security levels corresponding to the edge cloud are level 1 to level 3.

In a process in which the cloud data center 200 configures resource security levels for different cloud resources, the cloud data center 200 separately configures resource security levels for a computing resource, a network resource, and a storage resource. Resource security levels of different cloud resources may be classified into secret, confidential, top secret, and core top secret. The resource security level may also be represented by using an Arabic numeral. A larger numeral indicates a higher environment security level. For example, resource security levels corresponding to secret are level 2 to level 5, resource security levels corresponding to confidential are level 4 to level 7, resource security levels corresponding to top secret are level 8 and level 9, and a resource security level corresponding to core top secret is level 10.

In this embodiment of this application, cloud resources with different resource security levels are located in cloud environments with different environment security levels. A higher environment security level of a cloud environment indicates that the cloud environment can accommodate a cloud resource with a higher resource security level. For example, a cloud environment whose environment security level is level 9 can accommodate a cloud resource whose resource security level is level 9 or a lower level.

Still refer to FIG. 4. In the example shown in FIG. 4, the resource security levels of the cloud resources are classified into secret, confidential, top secret, and core top secret. Cloud environments with different environment security levels can accommodate cloud resources with different resource security levels. For example, a cloud environment of the secret cloud can accommodate cloud resources whose resource security levels are secret, confidential, top secret, and core top secret, and a cloud environment of the public cloud can accommodate cloud resources whose resource security levels are secret, confidential, and top secret. A cloud environment of the edge cloud can accommodate only a cloud resource whose resource security level is level 1.

In a possible implementation, when the cloud data center 200 configures a resource security level for the cloud resource, a correspondence exists, by default, between the resource security level of the cloud resource and an identity clearance level of a creator user who creates the cloud resource. A higher identity clearance level of the creator user indicates a higher default resource security level of the cloud resource. For example, if the identity clearance level of the creator user of the cloud resource is level 1, the resource security level of the cloud resource created by the user is level 1.

In the foregoing cloud resources, the cloud resources may be a plurality of different types of resources. The computing resource is, for example, an elastic cloud service (elastic compute service, ECS) resource, the storage resource is, for example, an object storage service (object storage service, OBS) resource, and the network resource is, for example, a virtual private cloud (virtual private cloud, VPC) resource. This is not specifically limited.

In a possible implementation, the cloud data center 200 further needs to configure authentication logic between authentication information for the data access control. The following describes the authentication logic between authentication information in detail with reference to different authentication information.

Authentication logic between the identity clearance level and the resource security level includes: If the identity clearance level of the user is higher than or equal to the resource security level of the cloud resource, the user is allowed to access data in the cloud resource. Authentication logic between the identity clearance level and the environment security level includes: If the identity clearance level of the user is higher than or equal to the environment security level, the user is allowed to access data in the cloud environment. Authentication logic between different cloud resource security levels includes: The data in the cloud resource can only flow from a low-security-level cloud resource to a high-security-level cloud resource. Authentication logic between different environment security levels includes: The data in a cloud platform can only flow from a low-security-level cloud environment to a high-security-level cloud environment.

Still refer to FIG. 4. In the example shown in FIG. 4, in the cloud environment of the public cloud, a user whose identity clearance level corresponds to a resource security level being a top secret level can access a cloud resource whose resource security level is a confidential level. A user whose identity clearance level corresponds to a resource security level being a confidential level can access a cloud resource whose resource security level is a secret level, but cannot access a cloud resource whose resource security level is a top secret level. A user whose identity clearance level corresponds to a resource security level being a confidential level cannot access a cloud resource whose resource security level is a secret level, and cannot access the cloud resource whose resource security level is a top secret level.

Step 202: Receive a data access request from the user, where the data access request is for requesting to access the data in the cloud resource.

In this embodiment of this application, after the cloud data center 200 configures the authentication information and the authentication logic between authentication information, the cloud data center 200 performs, at a policy decision point (policy decision point, PDP), unified permission check on the data access request sent by the user. An input of the policy decision point is the data access request. The data access request includes information such as a user identifier, an action, time, a destination IP address, and a source IP address. An output of the policy decision point is "allow" or "forbid". The following provides descriptions with reference to examples.

The cloud data center 200 receives the data access request from the user. When the data access request is for requesting to access the data in the cloud resource, the data access request carries the identity clearance level of the user. When the data access request is for requesting to transfer data in a source cloud resource to a destination cloud resource, the data access request carries the identity clearance level of the user, a resource security level of the source cloud resource, and a resource security level of the destination cloud resource. When the data access request is for requesting to transfer data in a source cloud environment to a destination cloud environment, the data access request carries the identity clearance level of the user, an environment security level of the source cloud environment, and an environment security level of the destination cloud environment.

Step 203: Process the data access request according to the authentication logic between authentication information, where the authentication logic includes control logic between authentication information, the authentication logic is for controlling data access permission of the user in the cloud resource or the cloud environment, and controlling a flow direction of the data between cloud resources or cloud environments, and the flow direction is from a low security level to a high security level.

The cloud data center 200 processes the data access request according to the authentication logic between authentication information. Specifically, the cloud data center 200 determines, according to the authentication logic, authentication information carried in the data access request, to allow or reject the data access request.

In a possible implementation, when the data access request is for requesting to read the data in the cloud resource, when the identity clearance level of the user is higher than or equal to the resource security level of the cloud resource in the data access request, the user is allowed to read data from the cloud resource.

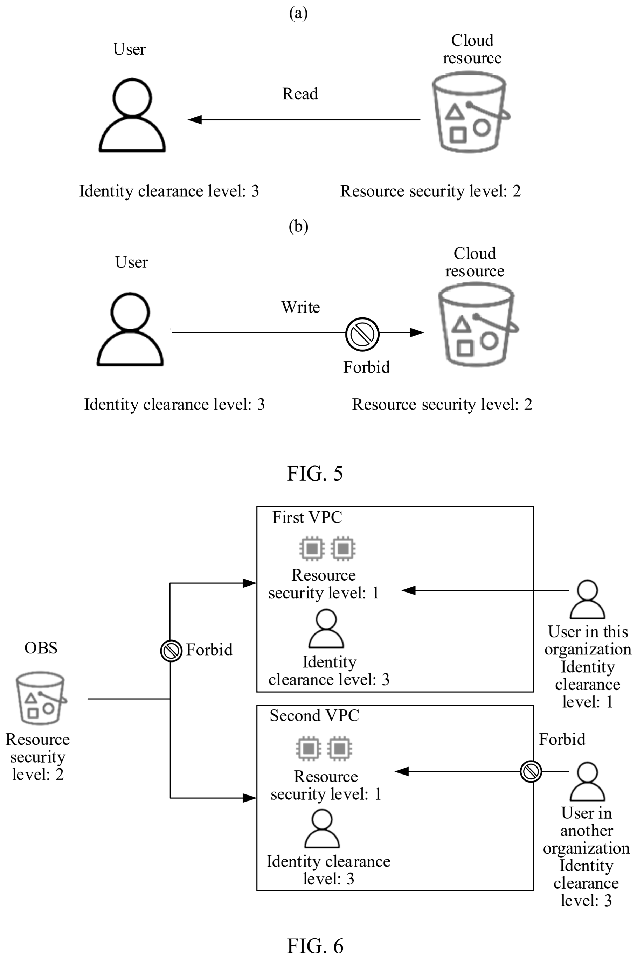

FIG. 5 is a diagram of reading and writing data in a cloud resource by a user according to an embodiment of this application. In an example shown in (a) in FIG. 5, an identity clearance level of the user is level 3, and a resource security level of the cloud resource is level 2. When the user sends a data access request to a cloud data center 200, and the data access request is for requesting to read the data in the cloud resource, because the identity clearance level of the user is higher than the resource security level of the cloud resource, the cloud data center 200 allows the user to read the data in the cloud resource.

In a possible implementation, the data access request is for requesting to write data into the cloud resource, and when the identity clearance level of the user is lower than or equal to the resource security level of the cloud resource, the user is allowed to write the data into the cloud resource.

Still refer to FIG. 5. In an example shown in (b) in FIG. 5, an identity clearance level of the user is level 3, and a resource security level of the cloud resource is level 2. When the user sends a data access request to a cloud data center 200 to request to write data into the cloud resource, because the identity clearance level of the user is higher than the resource security level of the cloud resource, the cloud data center 200 forbids the user to write the data into the cloud resource.

Table 1 is an example table of an implementation code of authentication logic according to an embodiment of this application. In the code shown in Table 1, "CL Larger Than Or Equal SL" in the code is a condition for the cloud data center 200 to allow the user to access the cloud resource. To be specific, when an identity level of the user is higher than or equal to a resource level of the cloud resource, the user is allowed to read the data from the cloud resource.

**Table 1**

| Example of a code of authentication logic between an identity clearance level and a resource security level |
|---|
| { |
| "Statement": [ |
| { |
| "Sid": "Scenario2", |
| "Effect": "Allow", |
| "Principal": {"ID": ["*"]}, |
| "Action": ["*"], |
| "Resource": ["*"], |
| "Condition": {"Bool": {"CL Larger Than Or Equal SL ": true,}} |
| } |
| ] |
| } |

In a possible implementation, when the data access request is for requesting to transfer data in a source cloud resource to a destination cloud resource, when a resource security level of the source cloud resource is lower than or equal to a resource security level of the destination cloud resource in a first access request, the data in the source cloud resource is allowed to flow to the destination cloud resource. It should be noted that, in a process in which the data flows from the source cloud resource to the destination cloud resource, when the identity clearance level of the user is higher than or equal to the resource security level of the source cloud resource, the data in the source cloud resource is allowed to be read and the data is written into the destination cloud resource.

FIG. 6 is a diagram of transferring data in a cloud resource according to an embodiment of this application. In an example shown in FIG. 6, a user needs to read data in an object storage service OBS resource and transmit the data through a first VPC and a second VPC, where a resource level of an OBS is level 2, a resource level of the first VPC is level 1, and a resource level of the second VPC is level 3. Because the resource level of the OBS is higher than the resource level of the first VPC but lower than the resource level of the second VPC, the user can read the data in the OBS resource and transmit the data through the second VPC, but cannot transmit the data through the first VPC.

In the example shown in FIG. 6, when the user reads the data in the object storage service OBS resource, an identity clearance level of the user needs to be higher than or equal to a resource security level of the object storage service OBS resource. When the user transmits the data in the object storage service OBS resource through the first VPC or the second VPC, the identity clearance level of the user needs to be higher than or equal to a resource security level of the first VPC or the second VPC. For example, if the identity clearance level of the user is level 3, and the resource security level of the first VPC is level 1, the user can transmit the data through the first VPC.

Table 2 is an example table of another implementation code of authentication logic according to an embodiment of this application. In an example shown in Table 2, "SL2 Larger Than Or Equal SL1" in the code is a condition for a cloud data center 200 to allow data to flow from a source cloud resource to a destination cloud resource. To be specific, when a resource security level of the destination cloud resource is higher than or equal to a resource security level of the source cloud resource, the data is allowed to flow from the source cloud resource to the destination cloud resource.

**Table 2**

| Implementation code of authentication logic between resource security levels |
|---|
| { |
| "Statement": [ |
| { |
| "Sid": "Scenariol", |
| "Effect": "Allow", |
| "Principal": {"ID": ["*"]}, |
| "Action": ["*"], |
| "Resource": ["*"], |
| "Condition": {"Bool": {"SL1 Larger Than Or Equal SL2": true,}} |
| }] |
| } |

In a possible implementation, the identity clearance level of the user cannot be effective across organizations, in other words, identity clearance levels of users in different organization architectures are independent of each other.

For example, in the example shown in FIG. 6, the resource level of the first VPC is level 1, the resource level of the second VPC is level 3, identity clearance levels of users in organizations corresponding to the first VPC and the second VPC are level 1, and the user can access a resource in the first VPC. However, although an identity clearance level of a user in another organization is level 3, because the identity clearance level of the user cannot be effective across organizations, the user whose identity clearance level is level 3 in the another organization cannot access the second VPC.

In a possible implementation, when the data access request is for requesting to transfer data in a source cloud environment to a destination cloud environment, when an environment security level of the source cloud environment is lower than or equal to an environment security level of the destination cloud environment in a first access request, the data in the source cloud environment is allowed to flow to the destination cloud environment.

It should be noted that, in a process in which the data in the source cloud environment flows to the destination cloud environment, when the identity clearance level of the user is higher than or equal to the environment security level of the source cloud environment and the environment security level of the destination cloud environment, the user is allowed to read the data in the source cloud environment and write the data into the destination cloud environment.

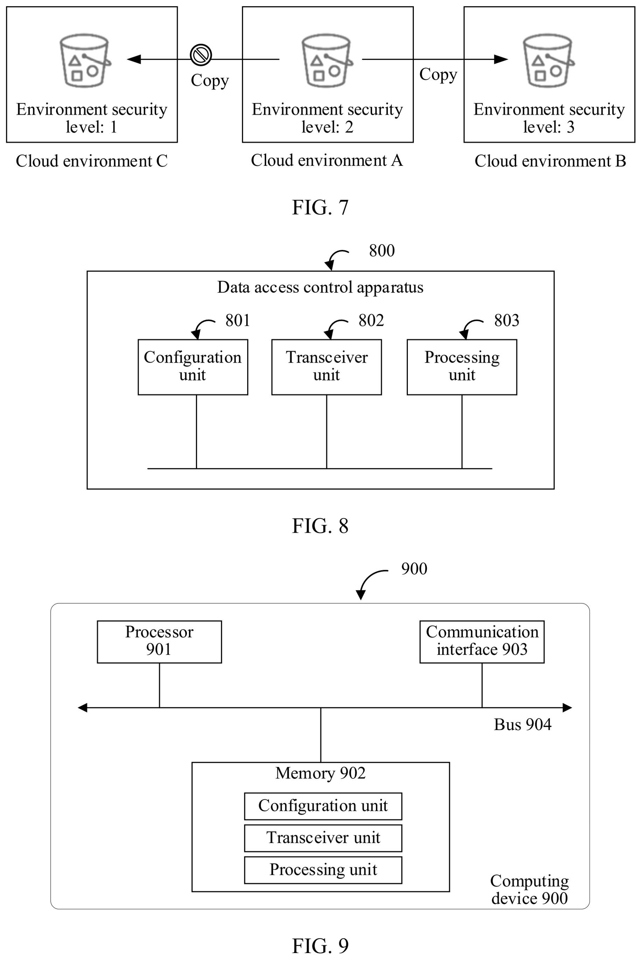

FIG. 7 is a diagram of transferring data in a cloud environment according to an embodiment of this application. In an example shown in FIG. 7, data in a cloud environment A needs to be copied to a cloud environment B and a cloud environment C. An environment security level of the cloud environment A is level 2, an environment security level of the cloud environment B is level 3, and an environment security level of the cloud environment C is level 1. The environment security level of the cloud environment A is higher than that of the cloud environment C but lower than that of the cloud environment B. Therefore, the data in the cloud environment A can flow to the cloud environment B, but cannot flow to the cloud environment C.

In the example shown in FIG. 7, when the data in the user cloud environment A is copied to the cloud environment B, the cloud environment A is a source cloud environment, and the cloud environment B is a destination cloud environment. Because an environment security level of the source cloud environment is lower than an environment security level of the destination cloud environment, a user can copy data in the source cloud environment to the destination cloud environment.

In the example shown in FIG. 7, when the data in the user cloud environment A is copied to the cloud environment C, the cloud environment A is a source cloud environment, and the cloud environment C is a destination cloud environment. Because an environment security level of the source cloud environment is higher than an environment security level of the destination cloud environment, the user cannot copy data in the source cloud environment to the destination cloud environment.

Table 3 is an example table of another implementation code of authentication logic according to an embodiment of this application. In an example shown in Table 3, "Target Cloud SL Larger Or Equals Than Source Target Cloud SL" in the code is a condition for a cloud data center 200 to allow the data to flow from the source cloud environment to the destination cloud environment. To be specific, when the environment security level of the destination cloud environment is higher than or equal to the environment security level of the source cloud environment, the data in the source cloud environment is allowed to flow to the destination cloud environment.

**Table 3**

| Implementation code of authentication logic between environment security levels |
|---|
| { |
| "Statement": [ |
| { |
| "Sid": "Scenariol", |
| "Effect": "Allow", |
| "Principal": {"ID": ["*"]}, |
| "Action": ["*"], |
| "Resource": ["*"], |
| "Condition": {"Bool": {"Target Cloud SL Larger Or Equals Than Source Target Cloud SL ": |
| true,}} |
| }] |
| } |

Step 204: Allow or reject the data access request of the user based on an authentication logic processing result of the data access request.

After the cloud data center 200 processes the data access request according to the authentication logic, to obtain the authentication logic processing result of the data access request, the cloud data center 200 allows or rejects the data access request based on the authentication logic processing result of the data access request. That the cloud data center 200 allows or rejects the data access request includes that the cloud data center 200 allows or rejects the user to access the data in the cloud resource or the cloud environment, allows or rejects the data flow between the different cloud resources, and allows or rejects the data flow between the different cloud environments.

In this embodiment of this application, for an unconventional access scenario, the cloud data center 200 may process the data access request based on temporary authorization information. For example, in the unconventional access scenario, the user temporarily transfers the data from a high-security-level cloud environment to a low-security-level cloud environment based on a service requirement, or transfers the data from a high-security-level cloud resource to a low-security-level cloud resource, or the user needs to temporarily access data in a cloud environment or a cloud resource whose security level is higher than the identity clearance level of the user. The following describes a data access request processing process in the unconventional access scenario.

In a possible implementation, the data access request further includes first temporary authorization information. When the environment security level of the source cloud environment is higher than the environment security level of the destination cloud environment, in a process in which the cloud data center 200 processes the data access request, the cloud data center 200 allows, based on the first temporary authorization information, the user to transfer the data in the source cloud environment to the destination cloud environment, where the first temporary authorization information is for authorizing flow of the data from a high-security-level cloud environment to a low-security-level cloud environment.

In a possible implementation, the data access request further includes second temporary authorization information. When the identity clearance level of the user is lower than the resource security level of the cloud resource, in a process in which the cloud data center 200 processes the data access request, the cloud data center 200 allows, based on the second temporary authorization information, the user to read the data in the cloud resource, where the second temporary authorization information is for authorizing the user to access a cloud resource whose resource security level is higher than the identity clearance level.

In a possible implementation, the data access request further includes third temporary authorization information. When the resource security level of the source cloud resource is higher than the resource security level of the destination cloud resource, in a process in which the cloud data center 200 processes the data access request, the cloud data center 200 allows, based on the third temporary authorization information, the user to transfer the data in the source cloud resource to the destination cloud resource, where the third temporary authorization information is for authorizing flow of the data from a high-security-level cloud resource to a low-security-level cloud resource.

In a possible implementation, the temporary authorization information includes approver information and signature information, the approver information includes one or more specified approvers that allow unconventional access, and the signature information includes a key for temporarily authorizing user access. The one or more specified approvers that allow unconventional access and the signature information are shown by a code below:
ApprovedBy: ["approver1", "approver2", "approver3"...]
ApprovedSig: ["approver1's Sig", "approver2's Sig", "approver3's Sig"...]

Table 4 is an example table of an implementation code of temporary authorization information according to an embodiment of this application. In an example shown in Table 4, "g:ApprovedBy":["approver1","approver2","approver3", ..."approverN"...] in the code represents approvers that allow unconventional access in the cloud data center 200. That is, when the foregoing approvers "approverl","approver2","approver3", ..."approverN" complete their approval, the data is allowed to flow from the high-security-level cloud environment to the low-security-level cloud environment, or the user is allowed to access the cloud resource whose resource security level is higher than the identity clearance level.

**Table 4**

| Implementation code of authentication logic between environment security levels |
|---|
| { |
| "Statement": [ |
| { |
| "Sid": "AllowApproval", |
| "Effect": "Allow", |
| "Principal": {"ID": ["*"]}, |
| "Action": ["*"], |
| "Resource": ["*"], |
| "Condition": { "For All Values: String Equals": { |
| "g:ApprovedBy":["approver1","approver2","approver3", ..."approverN"...] |
| }} |
| }] |
| } |

It can be learned from the foregoing embodiment that, in this embodiment of this application, the cloud data center combines a bell lapadula model BLP and an attribute-based access control ABAC model, configures the identity clearance level for the user, configures security levels for the cloud resources such as the network resource, the computing resource, and the storage resource, and controls the data flow between the different cloud resources based on the identity clearance level and the security levels, so that the data in the cloud resource flows from a cloud resource with a low resource security level to a cloud resource with a high resource security level, thereby avoiding leakage of the data in the cloud resource and improving data access control security.

The foregoing describes the data access control method provided in embodiments of this application. The following specifically describes a data access control apparatus provided in embodiments of this application.

FIG. 8 is a diagram of a structure of a data access control apparatus according to an embodiment of this application. In the example shown in FIG. 8, the data access control apparatus is configured to implement the steps performed by the computing device in the foregoing embodiments. The data access control apparatus 800 includes a configuration unit 801, a transceiver unit 802, and a processing unit 803.

The configuration unit 801 is configured to configure authentication information for data access control, where the authentication information includes one or more of the following: an identity clearance level, a resource security level, and an environment security level, the identity clearance level indicates access permission of a user, the resource security level indicates a security level of a cloud resource, the environment security level indicates a security level of a cloud environment in which the cloud resource is located, and the cloud resource includes one or more of the following: a computing resource, a network resource, and a storage resource. The transceiver unit 802 is configured to receive a data access request from the user, where the data access request is for requesting to access data in the cloud resource. The processing unit 803 is configured to process the data access request according to authentication logic, where the authentication logic includes control logic between authentication information, the authentication logic is for controlling data access permission of the user in the cloud resource or the cloud environment, and controlling a flow direction of the data between cloud resources or cloud environments, and the flow direction is from a low security level to a high security level.

In a possible implementation, the configuration unit 801 is specifically configured to configure identity clearance levels of different users based on an organization architecture level of a user, where a highest configurable identity clearance level of a user in a low-level organization is lower than a highest configurable identity level of a user in a high-level organization.

In a possible implementation, the configuration unit 801 is further configured to set an identity clearance level configuration manner of a new user, where the configuration manner includes inheriting an identity clearance level of an organization and performing configuration in a default manner, and the default manner is performing configuration based on a lowest identity clearance level.

In a possible implementation, the configuration unit 801 is further configured to configure the resource security level of the cloud resource based on an identity clearance level of a creator user, where the creator user is a user who creates the cloud resource, and the resource security level of the cloud resource is positively correlated with the identity clearance level of the creator user.

In a possible implementation, the processing unit 803 is specifically configured to: when the identity clearance level of the user is higher than or equal to the resource security level of the cloud resource, allow the user to read data from the cloud resource; and when the identity clearance level of the user is lower than or equal to the resource security level of the cloud resource, allow the user to write data into the cloud resource.

In a possible implementation, the data access request is for requesting to transfer data in a source cloud resource to a destination cloud resource, and the processing unit 803 is specifically configured to: when a resource security level of the source cloud resource is lower than or equal to a resource security level of the destination cloud resource, allow the user to transfer the data in the source cloud resource to the destination cloud resource.

In a possible implementation, the data access request is for requesting to transfer data in a source cloud environment to a destination cloud environment, and the processing unit 803 is configured to: when an environment security level of the source cloud environment is lower than or equal to an environment security level of the destination cloud environment, allow the user to transfer the data in the source cloud environment to the destination cloud environment.

In a possible implementation, the data access request further includes first temporary authorization information, and the processing unit 803 is further configured to: when the environment security level of the source cloud environment is higher than the environment security level of the destination cloud environment, allow, based on the first temporary authorization information, the user to transfer the data in the source cloud environment to the destination cloud environment, where the first temporary authorization information is for authorizing flow of the data from a high-security-level cloud environment to a low-security-level cloud environment.

In a possible implementation, the data access request further includes second temporary authorization information, and the processing unit 803 is further configured to: when the identity clearance level of the user is lower than the resource security level of the cloud resource, allow, based on the second temporary authorization information, the user to read the data in the cloud resource, where the second temporary authorization information is for authorizing the user to access a cloud resource whose resource security level is higher than the identity clearance level.

In a possible implementation, the data access request further includes third temporary authorization information, and the processing unit 803 is further configured to: when an environment security level of the source cloud resource is higher than an environment security level of the destination cloud resource, allow, based on the third temporary authorization information, the user to transfer the data in the source cloud resource to the destination cloud resource, where the third temporary authorization information is for authorizing flow of the data from a high-security-level cloud resource to a low-security-level cloud resource.

It should be understood that division of the units in the foregoing apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation, steps in the foregoing methods or the foregoing units may be implemented by using a hardware integrated logic circuit in a processor element, or may be implemented in the form of software invoked by the processing element.

It should be noted that, for ease of description, the foregoing method embodiments are described as a series of action combinations. However, a person skilled in the art should learn that the present invention or this application is not limited by the described action sequence. In addition, a person skilled in the art should also learn that embodiments described in this specification are all preferred embodiments, and actions included are not necessarily required in the present invention or this application.

Another appropriate step combination that can be figured out by a person skilled in the art based on the foregoing described content also falls within the protection scope of the present invention or this application. In addition, a person skilled in the art should also learn that embodiments described in this specification are all preferred embodiments, and actions included are not necessarily required in the present invention or this application.

FIG. 9 is a diagram of a structure of a computing device according to an embodiment of this application. As shown in FIG. 9, the computing device 900 includes a processor 901, a memory 902, a communication interface 903, and a bus 904. The processor 901, the memory 902, and the communication interface 903 are coupled through the bus (not shown). The memory 902 stores instructions. When executable instructions in the memory 902 are executed, the computing device 900 performs the method performed by the computing device in the foregoing method embodiments.

The computing device 900 may be one or more integrated circuits configured to implement the foregoing methods, for example, one or more application specific integrated circuits (application specific integrated circuit, ASIC), one or more microprocessors (digital signal processor, DSP), one or more field programmable gate arrays (field programmable gate array, FPGA), or a combination of at least two of these integrated circuit forms. For another example, when units in an apparatus are implemented in a form of scheduling a program by a processing element, the processing element may be a general-purpose processor, for example, a central processing unit (central processing unit, CPU) or another processor that can invoke a program. For still another example, the units may be integrated and implemented in a form of a system-on-a-chip (system-on-a-chip, SoC).

The processor 901 may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 902 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 902 stores executable program code, and the processor 901 executes the executable program code to separately implement functions of the configuration unit, the transceiver unit, and the processing unit, so as to implement the foregoing data access control method. That is, the memory 902 stores instructions for performing the foregoing data access control method.

The communication interface 903 uses a transceiver module, for example but not limited to, a network interface card or a transceiver, to implement communication between the computing device 900 and another device or a communication network.

In addition to a data bus, the bus 904 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

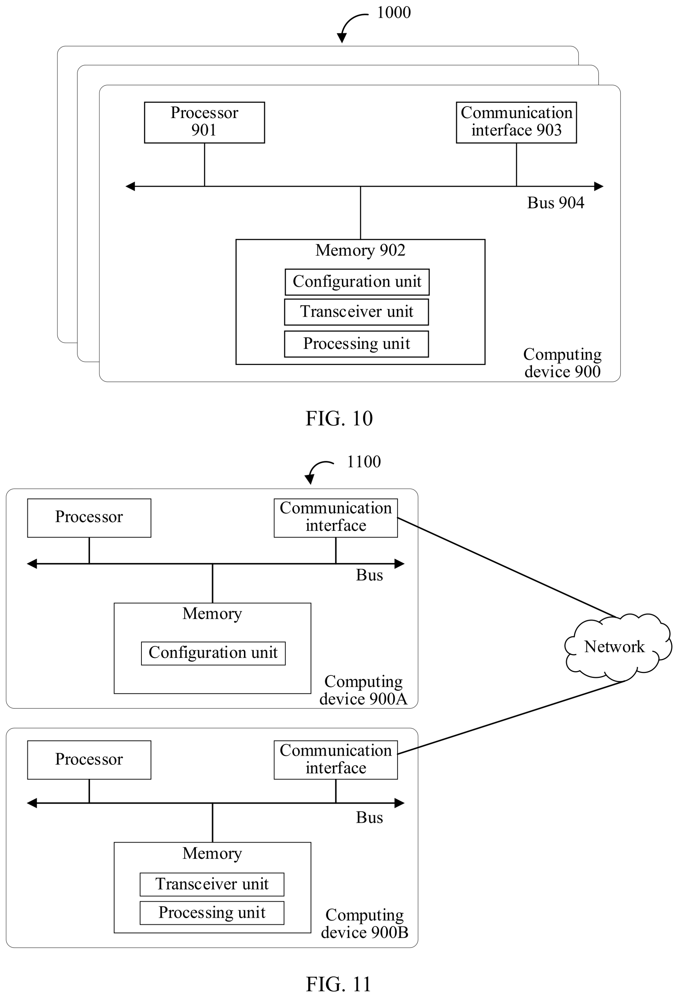

FIG. 10 is a diagram of a computing device cluster according to an embodiment of this application. As shown in FIG. 10, the computing device cluster 1000 includes at least one computing device 900.

As shown in FIG. 10, the computing device cluster 1000 includes at least one computing device 900. Memories 902 in one or more computing devices 900 in the computing device cluster 1000 may store same instructions for performing the foregoing data access control method.

In some possible implementations, the memories 902 in the one or more computing devices 900 in the computing device cluster 1000 may alternatively separately store some instructions for performing the foregoing data access control method. In other words, a combination of the one or more computing devices 900 may jointly execute the instructions for performing the data access control method.

It should be noted that memories 902 in different computing devices 900 in the computing device cluster 1000 may store different instructions respectively for performing some functions of the foregoing data access control apparatus. That is, instructions stored in the memories 902 in the different computing devices 900 may implement functions of one or more modules in an obtaining unit, the processing unit, and a creation unit.

In some possible implementations, the one or more computing devices 900 in the computing device cluster 1000 may be connected through a network. The network may be a wide area network, a local area network, or the like.

FIG. 11 is a diagram in which computer devices in a computer cluster are connected through a network according to an embodiment of this application. As shown in FIG. 11, a computing device 900A is connected to a computing device 900B through a network. Specifically, the computing device 900A and the computing device 900B are connected to the network through a communication interface in each computing device.

In a possible implementation, the memory in the computing device 900A stores instructions for performing a function of the configuration unit. In addition, the memory in the computing device 900B stores instructions for performing functions of the transceiver unit and the processing unit.

It should be understood that a function of the computing device 900A shown in FIG. 11 may alternatively be completed by a plurality of computing devices. Similarly, a function of the computing device 900B may alternatively be completed by a plurality of computing devices.

In another embodiment of this application, a computer-readable storage medium is further provided. The computer-readable storage medium stores computer-executable instructions. When a processor of a device executes the computer-executable instructions, the device performs the method performed by the cloud data center in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the cloud data center in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, division into the units is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for causing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data access control method, comprising:
configuring authentication information for data access control, wherein the authentication information comprises one or more of the following: an identity clearance level, a resource security level, and an environment security level, the identity clearance level indicates access permission of a user, the resource security level indicates a security level of a cloud resource, and the environment security level indicates a security level of a cloud environment;
receiving a data access request from the user, wherein the data access request is for requesting to access data in the cloud resource or the cloud environment;
processing the data access request according to authentication logic, wherein the authentication logic comprises control logic between authentication information, the authentication logic is for controlling data access permission of the user in the cloud resource or the cloud environment, or is for controlling a flow direction of the data between cloud resources or cloud environments, and the flow direction is from a low security level to a high security level; and
allowing or rejecting the data access request of the user based on an authentication logic processing result of the data access request.

2. The method according to claim 1, wherein configuring the authentication information for the data access control comprises:
configuring identity clearance levels of different users based on an organization architecture level of a user, wherein a configurable identity clearance level of a user in a low-level organization is lower than a configurable identity clearance level of a user in a high-level organization, and the configurable identity clearance level indicates a highest identity clearance level that can be configured for the user in the organization.

3. The method according to claim 2, wherein the method further comprises:
setting an identity clearance level configuration manner of a new user, wherein the configuration manner comprises configuration in inheritance manner and configuration in default manner, the configuration in inheritance manner is performing configuration by inheriting an identity clearance level of an organization, and the default manner is performing configuration based on a lowest identity clearance level.

4. The method according to any one of claims 1 to 3, wherein the method further comprises:
configuring the resource security level of the cloud resource based on an identity clearance level of a creator user, wherein the creator user is a user who creates the cloud resource, and the resource security level of the cloud resource is positively correlated with the identity clearance level of the creator user.

5. The method according to any one of claims 1 to 4, wherein the method further comprises:
when the identity clearance level of the user is higher than or equal to the resource security level of the cloud resource, allowing the user to read data from the cloud resource; and
when the identity clearance level of the user is lower than or equal to the resource security level of the cloud resource, allowing the user to write data into the cloud resource.

6. The method according to any one of claims 1 to 5, wherein the data access request is for requesting to transfer data in a source cloud resource to a destination cloud resource, and processing the data access request according to the authentication logic comprises:
when a resource security level of the source cloud resource is lower than or equal to a resource security level of the destination cloud resource, allowing the user to transfer the data in the source cloud resource to the destination cloud resource.

7. The method according to any one of claims 1 to 6, wherein the data access request is for requesting to transfer data in a source cloud environment to a destination cloud environment, and processing the data access request according to the authentication logic comprises:
when an environment security level of the source cloud environment is lower than or equal to an environment security level of the destination cloud environment, allowing the user to transfer the data in the source cloud environment to the destination cloud environment.

8. The method according to claim 7, wherein the data access request further comprises first temporary authorization information, and the method further comprises:
when the environment security level of the source cloud environment is higher than the environment security level of the destination cloud environment, allowing, based on the first temporary authorization information, the user to transfer the data in the source cloud environment to the destination cloud environment, wherein the first temporary authorization information is for authorizing flow of the data from a high-security-level cloud environment to a low-security-level cloud environment.

9. The method according to any one of claims 1 to 8, wherein the data access request further comprises second temporary authorization information, and the method further comprises:
when the identity clearance level of the user is lower than the resource security level of the cloud resource, allowing, based on the second temporary authorization information, the user to read the data in the cloud resource, wherein the second temporary authorization information is for authorizing the user to access a cloud resource whose resource security level is higher than the identity clearance level.

10. The method according to any one of claims 1 to 8, wherein the data access request further comprises third temporary authorization information, and the method further comprises:
when the resource security level of the source cloud resource is higher than the resource security level of the destination cloud resource, allowing, based on the third temporary authorization information, the user to transfer the data in the source cloud resource to the destination cloud resource, wherein the third temporary authorization information is for authorizing flow of the data from a high-security-level cloud resource to a low-security-level cloud resource.

11. The method according to any one of claims 1 to 10, wherein the cloud resource comprises one or more of the following: a computing resource, a network resource, and a storage resource.

12. The method according to any one of claims 1 to 11, wherein the cloud environment comprises one or more of the following: an edge cloud, a public cloud, and a secret cloud.

13. A data access control apparatus, comprising:
a configuration unit, configured to configure authentication information for data access control, wherein the authentication information comprises one or more of the following: an identity clearance level, a resource security level, and an environment security level, the identity clearance level indicates access permission of a user, the resource security level indicates a security level of a cloud resource, and the environment security level indicates a security level of a cloud environment;
a transceiver unit, configured to receive a data access request from the user, wherein the data access request is for requesting to access data in the cloud resource or the cloud environment; and
a processing unit, configured to process the data access request according to authentication logic, wherein the authentication logic comprises control logic between authentication information, the authentication logic is for controlling data access permission of the user in the cloud resource or the cloud environment, and controlling a flow direction of the data between cloud resources or cloud environments, wherein the flow direction is from a low security level to a high security level, wherein
the processing unit is further configured to allow or reject the data access request of the user based on an authentication logic processing result of the data access request.

14. The apparatus according to claim 13, wherein the configuration unit is specifically configured to:
configure identity clearance levels of different users based on an organization architecture level of a user, wherein a configurable identity clearance level of a user in a low-level organization is lower than a configurable identity level of a user in a high-level organization, and the configurable identity clearance level indicates a highest identity clearance level that can be configured for the user in the organization.

15. The apparatus according to claim 14, wherein the configuration unit is further configured to:
set an identity clearance level configuration manner of a new user, wherein the configuration manner comprises configuration in inheritance manner and configuration in default manner, the configuration in inheritance manner is performing configuration by inheriting an identity clearance level of an organization, and the default manner is performing configuration based on a lowest identity clearance level.

16. The apparatus according to any one of claims 13 to 15, wherein the configuration unit is further configured to:
configure the resource security level of the cloud resource based on an identity clearance level of a creator user, wherein the creator user is a user who creates the cloud resource, and the resource security level of the cloud resource is positively correlated with the identity clearance level of the creator user.

17. The apparatus according to any one of claims 13 to 16, wherein the processing unit is specifically configured to:
when the identity clearance level of the user is higher than or equal to the resource security level of the cloud resource, allow the user to read data from the cloud resource; and
when the identity clearance level of the user is lower than or equal to the resource security level of the cloud resource, allow the user to write data into the cloud resource.

18. The apparatus according to any one of claims 13 to 17, wherein the data access request is for requesting to transfer data in a source cloud resource to a destination cloud resource, and the processing unit is specifically configured to:
when a resource security level of the source cloud resource is lower than or equal to a resource security level of the destination cloud resource, allow the user to transfer the data in the source cloud resource to the destination cloud resource.

19. The apparatus according to any one of claims 13 to 18, wherein the data access request is for requesting to transfer data in a source cloud environment to a destination cloud environment, and the processing unit is configured to:
when an environment security level of the source cloud environment is lower than or equal to an environment security level of the destination cloud environment, allow the user to transfer the data in the source cloud environment to the destination cloud environment.

20. The apparatus according to claim 19, wherein the data access request further comprises first temporary authorization information, and the processing unit is further configured to:
when the environment security level of the source cloud environment is higher than the environment security level of the destination cloud environment, allow, based on the first temporary authorization information, the user to transfer the data in the source cloud environment to the destination cloud environment, wherein the first temporary authorization information is for authorizing flow of the data from a high-security-level cloud environment to a low-security-level cloud environment.

21. The apparatus according to any one of claims 13 to 18, wherein the data access request further comprises second temporary authorization information, and the processing unit is further configured to:
when the identity clearance level of the user is lower than the resource security level of the cloud resource, allow, based on the second temporary authorization information, the user to read the data in the cloud resource, wherein the second temporary authorization information is for authorizing the user to access a cloud resource whose resource security level is higher than the identity clearance level.

22. The apparatus according to any one of claims 13 to 18, wherein the data access request further comprises third temporary authorization information, and the processing unit is further configured to:
when the resource security level of the source cloud resource is higher than the resource security level of the destination cloud resource, allow, based on the third temporary authorization information, the user to transfer the data in the source cloud resource to the destination cloud resource, wherein the third temporary authorization information is for authorizing flow of the data from a high-security-level cloud resource to a low-security-level cloud resource.

23. The apparatus according to any one of claims 13 to 22, wherein the cloud resource comprises one or more of the following: a computing resource, a network resource, and a storage resource.

24. The apparatus according to any one of claims 13 to 23, wherein the cloud environment comprises one or more of the following: an edge cloud, a public cloud, and a secret cloud.

25. A computing device, comprising a processor, wherein the processor is coupled to a memory, the processor is configured to store instructions, and when the instructions are executed by the processor, the computing device is caused to perform the method according to any one of claims 1 to 12.

26. A computing device cluster, comprising at least one computing device, wherein the computing device comprises a processor, the processor is coupled to a memory, the processor is configured to store instructions, and when the instructions are executed by the processor, the computing device cluster is caused to perform the method according to any one of claims 1 to 12.

27. A computer-readable storage medium, wherein the computer-readable storage medium stores instructions, and when the instructions are executed, a computer is caused to perform the method according to any one of claims 1 to 12.

28. A computer program product, wherein the computer program product comprises instructions, and when the instructions are executed, a computer is caused to implement the method according to any one of claims 1 to 12.
